# EUROPEAN PATENT APPLICATION

(11) **EP 0 942 348 A1**
(43) Date of publication of application: **15.09.1999**
(21) Application number: 98103770.8
(22) Date of filing: 04.03.1998
(51) Int. Cl.: G06F 1/00, A01B 79/00

(54) **Flexible interconnection between a job computer and a user interface**

(71) Applicant: A.P. Laursen A/S, DK-7171 Uldum (DK)
(72) Inventor: Laursen, Nils Jorn, 8722 Hedensted (DK)
(74) Representative: Roerboel, Leif

(57) **Abstract**

The invention comprises a flexible, modular interconnection between a job computer (2) for use in an agricultural machine (1) and a user interface (5,8) which can be either dedicated to precisely the job computer of the particular machine and be constructed to form a single, integrated unit with the job computer (2), or where the user interface (8) can be og a general ("multi purpose") nature which may also be used to communicate with different job computers in other agricultural machines, and where said general user interface is connected to the job computer (2) with the aid of a communications module (6). The job computer, dedicated and/or general interface and communications module can be combined in various ways as depickted on the figure, yielding a high degree of flexibility for the user of agricultural machines.

## Description

### TECHNICAL FIELD OF THE INVENTION

The invention relates to a job computer used in connection with electronically controlled agricultural machines. More specifically the invention relates to a flexible, modular setup of the interconnection between said job computer and a dedicated user interface and/or between said job computer and a general, "multi purpose" user interface, this connection being established through the application of a suitable "communications module". According to the invention it is possible for a user of an agricultural machine to design precisely the system which provides an optimal communications solution under the particular circumstances.

### DESCRIPTION OF RELATED ART

Electronic control of agricultural machinery is disclosed in french patent application FR 27 23 792 A1 where a plurality of sensors and actuators in a tractor are coupled to a job computer. These means makes it possible to monitor, control and correct a number of the main operational parameters of the system. The job computer is directly coupled to the engine and transmission of the tractor, to the actuators manipulating the different tools mounted on the tractor and to a user interface. This interface is mounted in the driver's cab and constitute in principle an integral part of the job computer.

Said user interface according to FR 27 23 792 A1 is developed specifically for communication with the job computer mounted in that particular vehicle. This leads to at least two significant disadvantages and limitations for the user of the agricultural machine. First it would be desirable for the user to be able to choose another interface of a more general ("multi purpose") nature, with the aid of which it would be possible also to communicate with job computers developed for and mounted in other types of agricultural machines, and which interface the user may already be in possion of. Secondly it could be advantageous to be able to connect the job computer to further external equipment, such as for instance a personal computer with the aim of carrying out analyses, such as for instance average yield of a given field, the effect of fertilization, trend analyses over a number of years etc.

### SUMMARY OF THE INVENTION

As mentioned it would be desirable to provide a system increasing the flexibility regarding the choise of particular user interface. This possibility is obtained according to the invention by providing means either making it possible to couple a dedicated user interface (i.e. an interface designed specifically to communicate with the particular job computer), among other things comprising a keyboard and a display, directly to the job computer of a specific agricultural machine, said job computer not in itself encompasing an interface, or through the coupling of said job computer, which may or may nor be provided with a dedicated interface, to a general ("multi purpose") interface by means of a suitable communications module, inserted between the job computer and the general interface.

Several combinations of job computer, dedicated or/and general user interface and communications module are possible within the scope of the invention. These combinations will be described in the following detailed description of the invention including the accompanying drawing together with the appended claims.

### BRIEF DESCRIPTION OF THE DRAWINGS

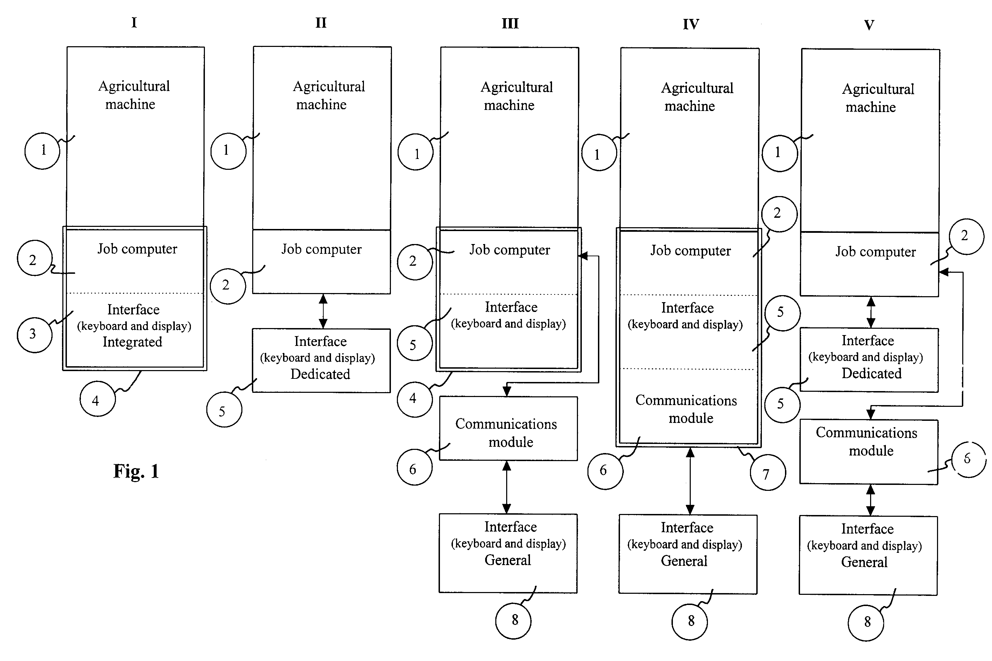

Fig. 1. Four different modular types of setup of a user interface system for a job computer according to the invention (systems II, III, IV and V) compaired with a prior art system (I).

### DETAILED DESCRIPTION OF THE INVENTION

Fig.1 shows four alternative embodyments according to the invention of a flexible interconnection between a job computer 2 and a user interface 5, 8. For comparison a prior art interconnection in principle corresponding to the one disclosed in french patent application FR 27 23 792 A1 is also shown (system I to the left of fig.1).

Fig. 1 shows a given agricultural machine 1 equipped with a corresponding job computer 2 functioning as an electronic control unit, provided with a plurality of input terminals (not shown) through which continous informations about the operation of the machine is provided by means of a plurality of suitable sensors located for instance in the engine, transmission and associated tool(s), where said job computer 2 furthermore contains the relevant information of the characteristics of the machines operational functions, and where said job computer 2 furthermore comprises a plurality of output terminals, by means of which control signals can be provided for instance to the engine, transmission and attached tool(s) using appropriate actuators. In order to be able to communicate with the job computer 2 a suitable user interface 3, 5, 8 either directly coupled to the job computer 2 or coupled to the job computer 2 through a suitable communications module 6 may be used. These various possibilities are shown in fig. 1 which encompases the following five systems:
Interconnection I (System I on fig. 1): Prior art
Interconnection II (System II on fig.1): Agricultural machine 1 comprising a job computer 2 not equipped with a user interface but where a user interface 5 dedicated to precisely said job computer 2 and comprising a keyboard and a display may be provided. This dedicated interface 5 is joined with the job computer 2 to form a single, integrated unit, i.e. the job computer 2 and the user interface 5 can not be visually destinguished from each other.
Interconnection III (System III on fig.1): The job computer 2 and the user interface 5 is "born" as an integrated unit 4 precisely corresponding to abovementioned interconnection I (prior art). It is however possible to connect a communications module 6 to the job computer 2 and through this communications module 6 to interconnect the job computer 2 with a general ("multi purpose") user interface 8 which may comprise a keyboard and a display.
Interconnection IV (System IV on fig.1): The job computer 2, user interface 5 and communications module 6 is "born" as an integrated unit 7 and it is possible through the communications module 6 within this unit 7 to couple said general user interface 8 to the job computer 2.
Interconnection V (System V on fig. 1): Just as in interconnection II the job computer 2 is in itself not provided with a user interface, but it is possible to purchase a dedicated interface 5 so that pricesely the same system as in interconnection II is obtained. Furthermore interconnection V provides the possibility to connect a communications module 6 directly to the job computer 2 and through this communications module 6 to couple said general user interface 8 to the job computer 2.

In interconnections III, IV and V the communication between the user and the job computer can either solely take place with the aid of the general user interface 8 or partly through the dedicated interface 5 and partly through the general interface 8. If communication takes place only through the general interface 8 means to put the dedicated interface 5 out of operation may easily be incorporated by a person skilled in the art.

The physical connection between the general interface 8 and the communications module 6 may for instance take place via a CAN-bus according to the LBS standard (Landwirtschaftlisches Bus System), DIN 9884-1 or -2 or -3 or -4.

## Claims

1. Flexible interconnection between a job computer and a user interface, said job computer (2) being used to control the operational parameters of an agricultural machine (1) and to register data concerning the use of the agricultural machine (1) (sowing, fertilization etc.) where a user interface (3,5) is connected to the job computer (2) to enable communication between the user of the agricultural machine (1) and the job computer (2), where said user interface (3,5) may comprise a keyboard and a display, characterised in that there to said job computer (2) is coupled a dedicated user interface (5) either forming an integral part af the job computer (2) or being mounted on the job computer (2), where said dedicated user interface (5) among other things may comprise a keyboard and a display, and in that there furthermore directly to said job computer (2) is coupled a communications module (6) through which it is possible to couple a general user interface (8) which also among other things comprises a keyboard and a display to said job computer (2) so that communication between the user of the agricultural machine (1) and the job computer (2) either exclusively takes place through said general user interface (8) or partly through said dedicated user interface (5) and partly through said general user interface (8).

2. Flexible interconnection between a job computer and a user interface, said job computer (2) being used to control the operational parameters of an agricultural machine (1) and to register data concerning the use of the agricultural machine (1) (sowing, fertilization etc.) where a user interface (3,5) is connected to the job computer (2) to enable communication between the user of the agricultural machine (1) and the job computer (2), where said user interface (5) may comprise a keyboard and a display, characterised in that said interface (5) is dedicated precisely to the job computer (2) of that particular agricultural machine (1) and that said dedicated user interface (5) can be mounted on the job computer (2), so that the dedecated interface (5) and the job computer (2) forms a self-contained functional unit.

3. Flexible interconnection between a job computer and a user interface according to claim 1, characterised in that said dedicated user interface (5) and said job computer (2) is constructed as one integrated functional unit (4) and that it is possible to couple said general user interface (8) comprising a keyboard and a display to said job computer (2) through a communications module (6).

4. Flexible interconnection between a job computer and a user interface according to claim 1, characterised in that said dedicated interface (5), communications module (6) and job computer (2) is constructed as one integrated functional unit (7), and that it through the communications module (6) contained within said functional unit (7) is possible to couple said general user interface (8) to said job computer (2) contained within said functional unit (7).

5. Flexible interconnection between a job computer and a user interface according to claim 1, 3 or 4, characterised (in that it comprises means that can put said dedicated user interface (5) out of operation, if said general user interface (8) is connected to the system.
